# EUROPEAN PATENT APPLICATION

(11) **EP 4 678 490 A1**
(43) Date of publication of application: **14.01.2026**
(21) Application number: 25186737.0
(22) Date of filing: 01.07.2025
(51) Int. Cl.: B60W 10/06, B60W 10/11, B60W 10/184, B60W 10/196, B60W 30/14, B60W 50/00

(54) **PREDICTIVE DYNAMIC SPEED CONTROL FOR A VEHICLE TRAVELING ALONG A HILLED ROUTE**

(30) Priority: 12.07.2024 US 202463670486 P; 25.06.2025 US 202519248694
(71) Applicant: Cummins, Inc., Columbus, Indiana 47201 (US)
(72) Inventor: LE, Dat Duc, Columbus, 47201 (US); BELLINGER, Steven, Columbus, 47201 (US); FOLLEN, Kenneth, Greenwood, Indiana, 46143 (US)
(74) Representative: Cleveland Scott York

(57) **Abstract**

A vehicle system includes a powertrain with a prime mover, a transmission with a number of gears, and foundation brakes. The vehicle system includes an electronic control system configured to determine, prior to reaching a downhill route segment, a pre-downhill target vehicle speed, a pre-downhill target transmission gear for the vehicle, and a downhill vehicle speed limit, control the vehicle to achieve the pre-downhill target vehicle speed and the pre-downhill target transmission gear for the vehicle prior to or upon reaching the downhill route segment, and control the vehicle during the downhill route segment not to exceed the downhill vehicle speed limit.

## Description

### TECHNICAL FIELD

The present application relates generally to vehicle control systems and more particularly but not exclusively to predictive dynamic speed control for a vehicle traveling along a hilled route and related apparatuses, processes, systems, and techniques.

### BACKGROUND

Present approaches to vehicle speed control suffer from a number of disadvantages and shortcomings including those relating to control of vehicles traveling along hilled routes including, for example, those respecting fuel economy and over-use of foundation brakes creating premature wear, over-heating, and other issues. There remains a significant need for the unique apparatuses, methods and systems disclosed herein.

### DISCLOSURE OF ILLUSTRATIVE EMBODIMENTS

For the purposes of clearly, concisely and exactly describing illustrative embodiments of the present disclosure, the manner and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created, and that the invention includes and protects such alterations, modifications, and further applications of the exemplary embodiments as would occur to one skilled in the art.

### SUMMARY OF THE DISCLOSURE

The present disclosure includes a unique system including dynamically controlling and adjusting vehicle speed prior to or upon reaching a downhill segment of a route. In an embodiment, a vehicle system includes an electronic control system in operative communication with a prime mover, a transmission, one or more powertrain retarders, and foundation brakes of a vehicle. The electronic control system is configured to determine, prior to reaching a downhill route segment, a downhill road grade, a downhill vehicle speed limit, a pre-downhill target vehicle speed, a pre-downhill target transmission gear, a downhill target vehicle speed, and a downhill target transmission gear for the vehicle. The vehicle is controlled to achieve the pre-downhill target vehicle speed and the pre-downhill target transmission gear for the vehicle prior to or upon reaching the downhill route segment. Additionally, the vehicle is controlled during the downhill route segment not to exceed the downhill vehicle speed limit. In another embodiment, the electronic control system is configured to determine a roll-out target speed for the vehicle over a portion of the downhill route segment and control the vehicle to accelerate toward the roll-out target speed when the vehicle reaches the portion of the downhill route segment. Further embodiments, forms, objects, features, advantages, aspects, and benefits shall become apparent from the following description and drawings.

### BRIEF DESCRIPTION OF THE DRAWINGS

FIG. 1 is a schematic illustration of a vehicle with a control system for controlling the speed of the vehicle.
FIGs. 2A-2D are diagram illustrations depicting certain aspects of a vehicle route as the vehicle approaches a downhill segment of the route.
FIGs. 3A-3C are diagram illustrations depicting certain types of vehicle routes with respect to roll-out segments of the routes and corresponding operational aspects of the vehicle.
FIG. 4 is a flow diagram illustration of an example procedure for controlling vehicle speed prior to a downhill route segment.
FIG. 5 is a diagram illustration depicting certain aspects of a software architecture for controlling various operational aspects of the vehicle.

### DETAILED DESCRIPTION OF ILLUSTRATIVE EMBODIMENTS

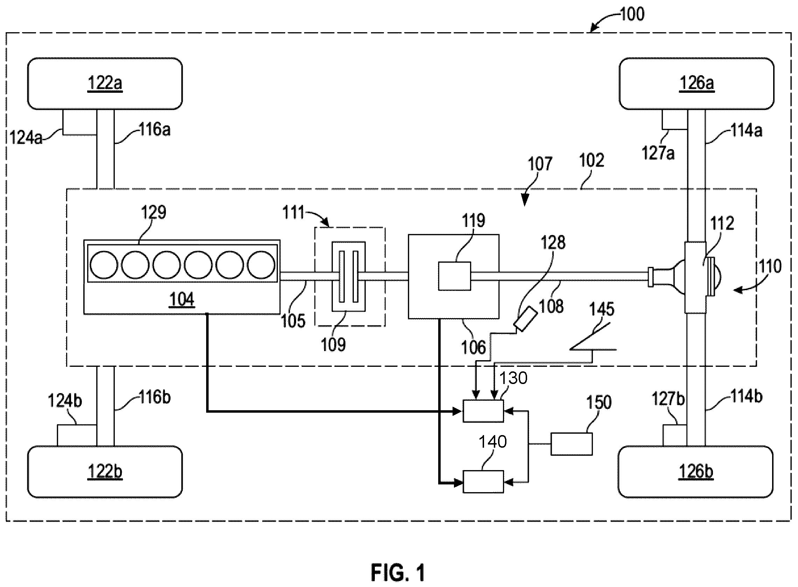

With reference to FIG. 1, there is illustrated a schematic view of an exemplary vehicle 100 including a powertrain 102 incorporated within vehicle 100. In the illustrated embodiment, the powertrain 102 includes a prime mover, such as engine 104 which in configured and provided as an internal combustion engine, structured to generate power for the vehicle 100. The powertrain 102 further includes a transmission 106 connected to the prime mover for adapting the output torque of the prime mover and transmitting the output torque to a driveline 107 including drive shaft 108. In the illustrated embodiment, the transmission 106 may be disengageably connected to an engine crankshaft 105 via a clutch 109.

In other embodiments, the transmission 106 may be disengageably connected to an engine crankshaft 105 and the engagement and disengagement may be by operation of a master clutch provided at the front of the transmission, by operation of the transmission to place a gear in a neutral condition, or by other clutch and/or gearing arrangements. Various embodiments contemplate that transmission 106 may be an automatic transmission, an automated manual transmission, a manual transmission or any other suitable transmission with a disconnect device 111 that is operable to selectively engage and disengage engine 104 from driveline 107.

In the rear-wheel-drive configuration illustrated for vehicle 100, the driveline 107 of powertrain 102 includes a final drive 110 having a rear differential 112 connecting the drive shaft 108 to rear axles 114a, 114b. It is contemplated that the components of powertrain 102 may be positioned in different locations throughout the vehicle 100. In one non-limiting example of a vehicle 100 having a front wheel drive configuration, transmission 106 may be a transaxle and final drive 110 may reside at the front of the vehicle 100, connecting front axles 116a and 116b to the engine 104 via the transaxle. It is also contemplated that in some embodiments the vehicle 100 is in an all-wheel drive configuration.

In the illustrated embodiment, vehicle 100 includes two front wheels 122a, 122b mounted to front axles 116a, 116b, respectively. Vehicle 100 further includes two rear wheels 126a, 126b mounted to rear axles 114a, 114b, respectively. It is contemplated that vehicle 100 may have more or fewer wheels than illustrated in FIG. 1. Vehicle 100 also includes foundation brakes 124a, 124b, 127a, 127b to mechanically slow one or more wheels 122a, 122b, 126a, 126b, respectively, upon application of a brake pedal 128 and/or automatically in response to one or more vehicle speed control outputs. Vehicle 100 also includes an engine braking system 129 operable to retard engine 104 and slow vehicle 100 without friction braking such as by compression release braking, exhaust braking, etc. Vehicle 100 may also include various components not shown, such as a fuel system including a fuel tank, a front differential, a suspension, an engine intake system and an exhaust system, which may include an exhaust aftertreatment system, just to name a few examples. In certain embodiments vehicle 100 may include an electric machine and a battery of appropriate capacity to provide a hybrid electric powertrain, a fuel cell, other power source, and/or one or more powertrain retarders.

Vehicle 100 includes an electronic or engine control unit (ECU) 130, sometimes referred to as an electronic or engine control module (ECM), or the like, which is directed to regulating and controlling the operation of engine 104. An accelerator pedal 145 and/or other throttle control mechanism can be connected to ECU 130 to initiate fueling by an operator. A transmission control unit (TCU) 140 is illustrated in vehicle 100, which is directed to the regulation and control of transmission 106 operation. ECU 130 and TCU 140 are each in operative communication with a plurality of vehicle sensors (not shown) in vehicle 100 for receiving and transmitting operating conditions of vehicle 100, such as temperature conditions, pressure conditions, speed conditions, fuel conditions, flow conditions to and from the engine, terrain conditions, weather conditions, global positioning system (GPS) data, and vehicle mass, for example. It is contemplated that ECU 130 and TCU 140 may be integrated within the engine 104 and transmission 106, respectively.

Vehicle 100 further includes a vehicle spend management (VSM) controller or control unit 150, which may be directed to the control of the operations described herein and/or directed toward an intermediary control for the regulation and control of the powertrain 102 in vehicle 100. The VSM control unit 150 is in operative communication with the ECU 130 and TCU 140. In certain embodiments, a portion or all of the of the VSM control unit 150 may be integrated within the ECU 130 or the TCU 140 or other vehicle control unit. In still other embodiments, at least the VSM control unit 150 communicates with ECU 130 and/or TCU 140 over a datalink provided by a wired or wireless connection so that outputs of VSM control unit 150 that are determined independently of ECU 130 and/or TCU 140 can be provided to the ECU 130 and/or TCU 140.

VSM control unit 150 may further be in operative communication with one or more of the plurality of vehicle sensors in vehicle 100 for receiving and transmitting conditions of vehicle 100, such as temperature and pressure conditions, route conditions, terrain conditions, speed conditions, and weather conditions, for example. It is contemplated that at least a portion of the conditions and/or measured inputs used for interpreting signals by the VSM control unit 150 may be received from ECU 130 and/or TCU 140, in addition to or alternatively to the plurality of vehicle sensors. Furthermore, the VSM control unit 150 may include one or more processors or controllers. Such as an idle coast management (ICM) controller, motoring controller, etc.

The VSM control unit 150 and/or ECU 130 and TCU 140 includes stored data values, constants, and functions, as well as operating instructions stored on, for example, a computer readable medium. Any of the operations of exemplary procedures described herein may be performed at least partially by the VSM control unit 150. In certain embodiments, the VSM control unit 150 includes one or more controllers structured to functionally execute the operations of the controller. Further details of certain exemplary embodiments of controller operations are discussed below. Operations illustrated are understood to be exemplary only, and operations may be combined or divided, and added or removed, as well as re-ordered in whole or part, unless stated explicitly to the contrary herein.

Certain operations described herein include operations to interpret or determine one or more parameters. Interpreting or determining, as utilized herein, includes receiving values by any method, including at least receiving values from a datalink or network communication, receiving an electronic signal (for example, a voltage, frequency, current, or pulse-width modulation (PWM) signal) indicative of the value, receiving a software parameter indicative of the value, reading the value from a memory location on a computer readable medium, receiving the value as a run-time parameter by any means known in the art, and/or by receiving a value by which the interpreted or determined parameter can be calculated, and/or by referencing a default value that is interpreted or determined to be the parameter value.

ECU 130, TCU 140, and VSM control unit 150 are exemplary components of an integrated circuit-based electronic control system (ECS) which may be configured to control various operational aspects of vehicle 100 and powertrain 102 as described in further detail herein. An ECS according to the present disclosure may be implemented in a number of forms and may include a number of different elements and configurations of elements. In certain preferred forms an ECS may incorporate one or more microprocessor-based or microcontroller-based electronic control units sometimes referred to as electronic control modules. An ECS according to the present disclosure may be provided in forms having a single processing or computing component, or in forms comprising a plurality of operatively coupled processing or computing components; and may comprise digital circuitry, analog circuitry, or a hybrid combination of both of these types. The integrated circuitry of an ECS and/or any of its constituent processors/controllers or other components may include one or more signal conditioners, modulators, demodulators, arithmetic logic units (ALUs), central processing units (CPUs), limiters, oscillators, control clocks, amplifiers, signal conditioners, filters, format converters, communication ports, clamps, delay devices, memory devices, analog to digital (A/D) converters, digital to analog (D/A) converters, and/or different circuitry or functional components as would occur to those skilled in the art to provide and perform the communication and control aspects disclosed herein.

One exemplary embodiment of VSM control unit 150 is configured to dynamically adjust the vehicle speed toward a target speed before the vehicle is on a downhill segment of a route. In the exemplary embodiment, the vehicle speed may be dynamically adjusted toward the target speed prior to or upon reaching the downhill segment of the route. VSM control unit 150 can use look ahead data and vehicle parameters such as vehicle mass to determine or predict a terminal speed and transmission gear for the vehicle. Terminal speed and transmission gear may be determined based on any one or more of the foregoing conditions (i) the terminal speed and transmission gear of the vehicle result in the vehicle traverses the downhill route segment safely based on the road slope or grade in view of the vehicle's operating parameters, such as vehicle mass, rear axle ratio, rolling radius of the tires, and/or other parameters that impact the vehicle's ability to traverse the downhill route segment. (ii) the terminal speed and transmission gear may be determined based on the condition that powertrain retarder has sufficient retarding power to compensate for road grade power after taking into account all losses, including aerodynamic, rolling friction, and powertrain losses. (iii) the terminal and transmission gear speed determination may involve driver intervention or control of the vehicle, or may not involve driver intervention or control of the vehicle. VSM control unit 150 may determine target speed and transmission gear based on the following rules: (iv) target speed is smaller than both terminal speed and the speed limit (v) target gear is smaller than both terminal gear and the highest transmission gear allowed at the speed limit (vi) target speed and gear are the highest values among possible values which meet condition (iv), condition (v), and the conditions used to define terminal speed and transmission gear as in (i), (ii), and (iii). VSM control unit 150 may also be configured to dynamically adjust the vehicle speed while the vehicle is traveling along a downhill segment of a route in addition to dynamically adjusting the vehicle speed toward a target speed before the vehicle is on the downhill segment of a route. VSM control unit 150 is also configured to control the vehicle speed not to exceed the speed limit during the downhill segment.

Another exemplary embodiment of VSM control unit 150 may be configured to dynamically adjust the vehicle speed to a roll-out target speed over a portion of the downhill route segment. In the exemplary embodiment, VSM control unit 150 may control the vehicle speed to accelerate toward the roll-out target speed when the vehicle reaches a portion of the downhill route segment. For example, VSM control unit 150 may use look ahead data to determine a roll-out target speed in response to a speed limit (*for example,* a first posted speed limit) of the portion of the downhill route segment and a speed limit (*for example,* a second posted speed limit) along a route segment that is forward or ahead of the portion of the downhill route segment.

It shall be appreciated that a given downhill route segment according to the present disclosure may be preceded by an uphill route segment leading to a local apex, a substantially flat or zero-grade route segment, and/or a downhill route segment of a differing grade than the given downhill route segment. Likewise, a downhill vehicle speed limit according to the present disclosure may comprise a speed limit of the vehicle associated with a downhill route segment preceded by any one or more of the foregoing types of preceding segments. Similarly, a pre-downhill vehicle target speed according the to present disclosure may comprise a target speed of the vehicle associated with any one or more of the foregoing types of segments preceding a downhill route segment.

It is contemplated the look ahead data used to determine the terminal speed may be include data collected using a number of techniques including, for example, terrain data, environmental conditions, road surface conditions, a proximity or position of other vehicles, a spacing or distance to one or more other vehicles, a speed of one or more other vehicles, route conditions, upcoming grade or road slope conditions, GPS data, mapping data, inputs from one or more other vehicles or a forward looking radar system, and/or one or more models of the vehicle 100 including estimated mass, aerodynamic drag, rear axle ratio, rolling radius of the tires, and other conditions associated with vehicle 100. Terrain data may be gathered from a grade sensor such as an inclinometer or computer model structured to determine or estimate grade information from a map or geographic information system (GIS) data set which may be provided on board a vehicle or received via transmission from a remote location or combinations of such techniques.

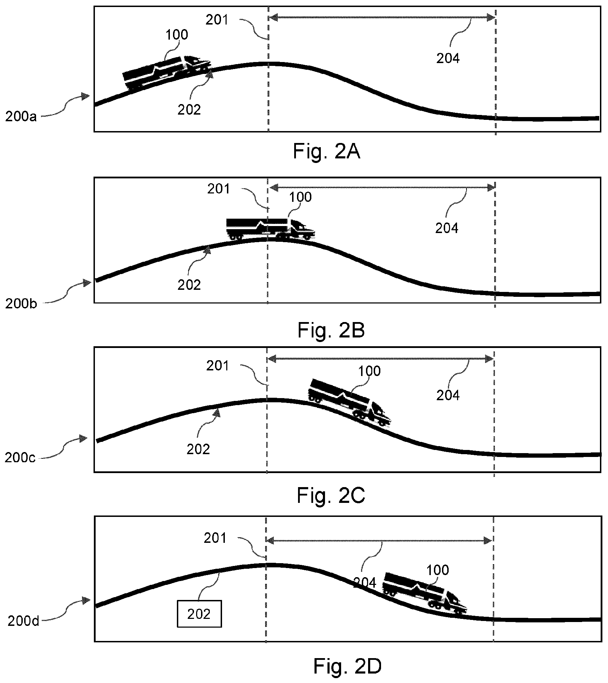

With reference to FIGs. 2A-2D, there are illustrated diagrams 200a, 200b, 200c, and 200d depicting a vehicle 100 at a plurality of locations along a route 202 including a downhill route segment 204. At the location illustrated in FIG. 2A, vehicle 100 is traveling along a segment of route 202 preceding downhill route segment 204. At the illustrated location (or one or more additional or alternative locations prior to downhill segment) an electronic control system of vehicle 100 may obtain look ahead data including at least one of a future road grade and speed limit information for route 202. The look-ahead data may be obtained from one or more on-vehicle systems, one or more off-vehicle systems via a wireless communication link, or a combination thereof. In some embodiments, for example, the electronic control system of vehicle 100 may identify downhill segment in response to one or more GPS signals and on-board map information.

The electronic control system of vehicle 100 may utilize the look-ahead data or at least one of future road grade and speed limit information to determine if vehicle 100 is approaching a downhill route segment 204 and, in response, to determine a pre-downhill target speed a pre-downhill target transmission gear a downhill target speed, and a downhill target transmission gear. The pre-downhill target speed pre-downhill target transmission gear, downhill target speed, and downhill target transmission gear may be determined according to an objective function optimization configured to minimize fuel consumption (or energy consumption, for example, in the case of an electric vehicle, a hybrid combustion-electric vehicle, or a fuel cell vehicle) subject to a vehicle speed limit constraint and potentially subject to one or more additional constraints such as, for example, a minimum vehicle speed, a maximum travel time, a target deceleration rate, or other constraints as will occur to one of skill in the art with the benefit and insight of the present disclosure. The vehicle speed limit constraint may be a posted or legal speed limit obtained from one or more on-vehicle systems, one or more off-vehicle systems via a wireless communication link, or a combination thereof.

The electronic control system of vehicle 100 is further configured and operable to control the vehicle speed to achieve a pre-downhill target speed and control the vehicle transmission to a pre-downhill target transmission gear prior to or upon reaching the beginning of downhill route segment 204. The pre-downhill target speed and the pre-downhill target transmission gear may be utilized by vehicle 100 during a portion of or during substantially all of the downhill route segment 204 or may be varied according to one or more downhill target speed limits and/or a one or more downhill target transmission gears. The pre-downhill target speed and the pre-downhill target transmission gear may be selected to provide an initial vehicle speed less than that the downhill vehicle speed limit, and a transmission gear predicted to allow vehicle 100 to accelerate up to the downhill vehicle speed limit at predetermined location along the downhill route segment. The fuel and/or energy consumption optimization may allow a vehicle to coast for some or all of the distance between the position of vehicle 100 depicted in FIG 2A and the position depicted in FIG. 2B and thereafter to accelerate along downhill route segment 204 up to the downhill vehicle speed limit.

At the location illustrated in FIG. 2B, vehicle 100 has reached an apex 201 at the beginning of a downhill route segment 204. Upon or prior to reaching the apex 201, a speed of vehicle 100 has preferably been controlled to achieve the vehicle speed to a target speed and the transmission of the has preferably been controlled to engage the target transmission gear. Vehicle 100 may begin descent along downhill route segment 204 at least initially traveling at or about the pre-downhill target speed in the pre-downhill target transmission gear.

At the location illustrated in FIG. 2C, vehicle 100 is traveling at a point along downhill route segment 204. The electronic control system of vehicle 100 is configured and operable to maintain or reduce the speed of vehicle 100 at or below the downhill vehicle speed limit. As vehicle 100 proceeds along downhill route segment 204, the electronic control system of vehicle 100 may control one or more components of the powertrain to at least one of reduce the speed of the vehicle and maintain speed of the vehicle to comply with the downhill vehicle speed limit. The electronic control system may, for example, engage and operate one or more of a powertrain retarder, a transmission gear downshifting, and vehicle foundation brakes in maintain or reduce the speed of vehicle 100 at or below the downhill vehicle speed limit. In some operating scenarios, an electronic control system may be configured and operated to supplement a powertrain retarder with foundation brakes to achieve a downhill vehicle speed limit. Some such scenarios may be performed for short downhill operating scenarios (*e*.*g*., local grade variation). It shall be appreciated that a powertrain retarder according to the present disclosure may comprise, for example, an engine brake such a compression release brake or an exhaust brake, a hydraulic driveline retarder, powertrain/vehicle accessories, and electromagnetic driveline retarder, a motor/generator-based regenerative brake, or other powertrain retarders as will occur to one of skill in the art with the benefit and insight of the present disclosure.

At one or more points during the downhill route segment, the electronic control system may control operation of a powertrain retarder to contribute to at least one of the reducing speed of the vehicle and the maintaining speed of the vehicle without applying the foundation brakes. Operation of the engine brake may be prioritized as a first order operation utilized to maintain or reduce vehicle speed along downhill route segment 204.

At one or more points during the downhill route segment, the electronic control system may during the downhill route segment, downshift the transmission to a lower gear to contribute to at least one of the reducing speed of the vehicle and the maintaining speed of the vehicle. Transmission downshift may be prioritized as a second order operation (after or subordinate to operation of the engine brake) utilized to maintain or reduce vehicle speed along downhill route segment 204. Alternatively, transmission downshift may be prioritized as a first order operation (before or superordinate to operation of the engine brake) utilized to maintain or reduce vehicle speed along downhill route segment 204.

At one or more points during the downhill route segment, the electronic control system may, during the downhill route segment and during downshifting of the transmission, operate the foundation brakes to contribute to at least one of the reducing speed of the vehicle and the maintaining speed of the vehicle. Operation of the foundation brakes may be performed in combination with a transmission downshift to maintain or reduce vehicle speed along downhill route segment 204. For example, operation of the foundation brakes may be performed while a transmission clutch is open and at least one of a prime mover is decoupled from the road wheels and the transmission is decoupled from the road wheels. Such operation may comprise brake snubbing of otherwise uncontrolled or minimally controlled downhill acceleration that may occur when the road wheels are decoupled from the prime mover and/or transmission. Operation of the foundation brakes may be prioritized as a third order operation (after or subordinate to a transmission downshift) utilized to maintain or reduce vehicle speed along downhill route segment 204 or, alternatively, may be given a higher priority.

The present disclosure contemplates a number of brake snubbing operations which can be utilized in reducing vehicle speed to a pre-downhill vehicle speed target and/or in reducing or maintaining speed of the vehicle at or below a downhill vehicle speed limit. Some example brake snubbing operations comprise operating foundation brakes to reduce vehicle speed until the vehicle is capable of downshifting. Some example brake snubbing operations comprise operating foundation brakes during transmission gear shifting to limit or prevent positive vehicle/engine acceleration or provide negative vehicle/engine acceleration. Some example brake snubbing operations comprise operating foundation brakes and thereafter monitoring vehicle/engine speed to determine whether to perform additional operation of the foundation brakes. Some example brake snubbing operations comprise modulating retarding power in response to local variation in road grade. Some example brake snubbing operations comprise operating foundation brakes to avoid or mitigate gear downshifting events. Some example brake snubbing operations comprise operating foundation brakes to avoid or mitigate the need for control action to reduce vehicle speed below speed limit. Some example brake snubbing operations comprise prior to a downhill route segment, first controlling one or more components of the powertrain to provide at least one of reducing speed of the vehicle and maintaining speed of the vehicle to without applying the foundation brakes and, in response to a determination that the first control is not effective to achieve the pre-downhill target vehicle speed, operate the foundation brakes to one of reduce speed of the vehicle and maintain speed of the vehicle.

When approaching or during approaching maximum powertrain retarding ability, brake snubbing may be utilized. Brake snubbing could be with gear shift. Brake snubbing could be performed to reduce vehicle speed below target while continuing to apply powertrain retarder. This can be used as to test whether temporary road grade variation exists such that vehicle speed can be maintained without preforming a full gear shift.

At the location illustrated in FIG. 2D, vehicle 100 is traveling at a point along downhill route segment 204 approaching the end of downhill route segment 204. The electronic control system of vehicle 100 may utilize look-ahead data to determine if vehicle 100 is approaching the end of the downhill route segment 204 and, in response to such a determination, control the vehicle 100 to perform a hill roll-out (HRO) operation to acceleration vehicle 100 over a portion of the downhill route segment 204. HRO operation may control the vehicle speed to accelerate toward a roll-out target speed when vehicle 100 reaches the portion of the downhill route segment 204. The electronic control system may be configured to determine a roll-out target speed for the vehicle over a portion of the downhill route segment and control the vehicle to allow acceleration in response to gravity toward the roll-out target speed when the vehicle reaches a predetermined position or portion of the downhill route segment. The electronic control system of vehicle 100 may determine a roll-out target speed in response to one of a first posted speed limit of the portion of the downhill route segment and a second posted speed limit of a forward segment forward of the portion of the downhill route segment.

FIGs 2A-2D are one example of a predictive dynamic speed control (PDSC) which may be implemented in and executed by an electronic control system of vehicle 100. The PDSC may comprise a number of additional and/or alternative aspects. In one aspect, the PDSC may limit the speed of vehicle 100 to posted speed limit over a substantially flat road segment. For example, if a vehicle route remains substantially flat but posted speed limit is decreased, the PDSC may control vehicle speed to ramp down to a new posted speed limit in a similar way as the illustration for the case of downhill operation. The PDSC may operate in both cruise control and accelerator-based driving. In cruise control operation, the PDSC may reduce vehicle speed from a nominal isochronous cruise control speed to a safe hill descent speed. In accelerator-based operation, the PDSC may prevent a driver from accelerating back to the posted speed limit which is higher than the safe hill descent speed.

In a further aspect, when a vehicle approaches a lower posted speed limit and a driver does not take action to reduce vehicle speed, the PDSC may activate and apply a powertrain retarder and/or downshifts to reduce vehicle speed to the new posted speed limit. After reaching the new posted speed limit, the PDSC may inactive and return full controllability of vehicle to driver given that the vehicle is not on a downhill. In another embodiment, after reaching the new posted speed limit, PDSC may stay active and always enforces vehicle speed to posted speed limit.

In another aspect, when a vehicle approaches a downhill and driver does not take action but tries to increase vehicle speed to the posted speed limit, PDSC may activate and apply the engine brake and/or downshift to reduce vehicle speed and gear to desired values to enable a safe grade descent. Throughout the downhill, PDSC may remain activated effective to maintain vehicle speed at or below a downhill speed limit.

In a further aspect, the PDSC may determine the moments it should start ramping down/downshifting to stage vehicle before a downhill route segment as well as when to start hill roll-out (HRO) operation. The PDSC may determine one or more predicted speeds as are vectors corresponding to a predetermined look-ahead horizon (*for example,* a 2km look-ahead horizon). These vectors may be calculated at every time step and used to determine when to take action to meet vehicle speed requirements such as the pre-downhill vehicle target speed, pre-downhill target transmission gear, downhill target speed limit, downhill target transmission gear, and/or roll-out target speed and roll-out target transmission gear.

In another aspect, the PDSC may, during the staging vehicle before downhill (for example, while the vehicle is on a substantially flat road segment) and vehicle already reached its target transmission gear and speed, the PDSC may perform a pseudo cruise control mode to automatically fuel the vehicle to maintain this target speed on flat road.

In a further aspect, the PDSC may perform a corrective mechanism during pre-downhill ramping down process. For example, if vehicle mass has been underestimated or overestimated, the PDSC may observe an error during a pre-downhill staging operation and command correction in the form of reduced or increased fueling, reduced or increased engine braking, and/or more or less aggressive gear downshifting, and/or utilization of vehicle foundation brakes as the vehicle approaches an apex before a downhill route segment. In this manner, the PDSC may rely on the fact that prediction is more accurate over time as it approaches an apex before a downhill route segment, thus making the corrective actions effective.

In a further aspect, when a powertrain retarder is not capable of controlling downhill speed and downshift is not possible (for instance, because GPS is fully lost), PDSC engages the vehicle foundation brakes to reduce engine speed for being able to downshift. Other cases that foundation brakes switch can be utilized are when there are uncertainties in the input signals to PDSC, such as vehicle mass estimate, grade data. The PDSC may utilize a margin factor for engine retarding torque curve for robustness. If foundation brakes temperature is elevated, the margin factor can be higher to reduce the possibility that foundation brakes have to be used. Higher margin can result in lowering target transmission gears and vehicle speeds during downhill. Different brake snubbing techniques may result in different brake temperature profiles. Therefore, calibrations for brake snubbing parameters can be obtained to allow the PDSC to achieve low brake temperature in connection with foundation brake operation requests. The PDSC may utilize foundation brakes as a torque filling device during transmission shifting to maintain vehicle speed on downhill.

In a further aspect, the PDSC may utilize a feedback mechanism which determines whether the vehicle is accelerating or over-speeding although a powertrain retarder is already utilized at its maximum capacity or whether the powertrain retarder is not being utilized at its predicted maximum capability. For example, in a scenario in which vehicle mass has been underestimated and actual road grade is greater than predicted road grade, the PDSC determines that a desired gear is gear 12, however, the actual desired gear should be 8. Under this scenario, the PDSC may maximize the utilization of powertrain retarder and apply the foundation brakes to slow down vehicle to the speed that transmission can be downshifted, and then execute the downshifts. The sequence may be repeated until the vehicle has reached a safe descent transmission gear and speed. The PDSC may make similar use of such a feedback mechanism when GPS data has been lost and a safe transmission gear has been similar incorrectly determined. In another example, when powertrain is not using its predicted retarding capability by comparing actual power and the predicted power, the PDSC can perform an upshift mechanism to get to a higher transmission gear. A specific scenario this mechanism can be applied is when look-ahead data is lost and vehicle got back to flat road, the PDSC can identify to resume vehicle back to normal state.

In some scenarios a driver may reduce vehicle speed further from PDSC target speed, such as in construction zone where a predicted speed limit does not reflect an actual speed limit. The PDSC may supports a driver intervention mechanism sequence in which a driver depresses foundation brakes to reduce vehicle speed. After using foundation brakes, the driver may depress accelerator pedal to increase vehicle speed during which time the PDSC limits vehicle speed and responsiveness to accelerator pedal requests to a predetermined speed limit (such as one of the limits disclosed herein) and/or acceleration limit (such as an acceleration ramp limit). If the driver depresses the accelerator pedal in an attempt to exceed the PDSC target speed and/or target acceleration, PDSC may limit vehicle speed and/or acceleration to be within the limits.

In some scenarios a driver may intervene in PDSC operation with a manual gear request, for example, by manually downshifting a transmission gear below a gear initially selected by the PDSC. In such scenarios, the PDSC may choose a final transmission gear as the minimum value between PDSC gear request and driver gear request. Because the PDSC command speed is responsive to the final transmission gear request, if the final gear request is the driver's requested gear, PDSC command speed can be decreased further from the original PDSC command speed.

In some scenarios a driver may intervene in PDSC operation with a foundation brakes request, for example, a driver may depress the foundation brake pedal to a greater degree with desired greater vehicle deceleration than would otherwise be provided by the PDSC. In such scenarios, the driver's foundation brakes may prevail over the PDSC request. In another scenario the final foundation brakes request can be the sum total request of the braking requested by the PDSC and that requested by the driver.

In a further aspect, the PDSC may perform hill roll-out (HRO) actions by utilizing grade at the end of the downhill section to perform and performing either motoring, neutral coast, or engine-off coast to meet posted speed limit requirements, increase fuel economy, and/or improve driveability.

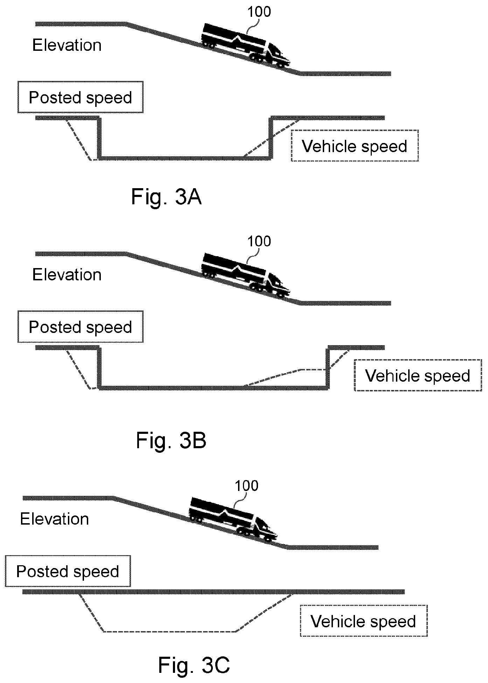

The PDSC may perform any types of HRO operations, depending on the topology of posted speed limit and grade illustrated in, but not limited to, FIGs. 3A-3C . In a first example of HRO operation in FIG. 3A, a posted speed limit is increased before downhill route segment ends and the PDSC increases the downhill speed target to allow vehicle speed to ramp up to the increased posted speed limit while on the downhill route segment. The level of vehicle speed ramping before the increased posted speed limit may be determined by a pre-defined calibration in the amount of vehicle speed higher than the posted speed limit on downhill and/or meet the requirement that the distance of vehicle speed higher than the posted speed on downhill is smaller than a pre-defined calibration. The allowed amount of vehicle speed higher than the posted speed limit on downhill may be determined based on the posted speed limit on downhill and the increased posted speed limit. In a second example of HRO operation in FIG. 3B, a posted speed limit increases at or after the end of a downhill route segment and the PDSC increases the downhill speed target to allow vehicle speed to ramp up to the increased posted speed limit while on the downhill route segment. At and after the end of the downhill segment, the PDSC limits vehicle speed to avoid vehicle speed exceeding the allowed level of vehicle speed ramping before the increased posted speed limit independent of driver acceleration action. The limitation can be performed by a feature such as Road Speed Governor. The level of vehicle speed ramping before the increased posted speed limit may be determined by a pre-defined calibration in the amount of vehicle speed higher than the posted speed limit on downhill and/or meet the requirement that the distance of vehicle speed higher than the posted speed on downhill is smaller than a pre-defined calibration. The allowed amount of vehicle speed higher than the posted speed limit on downhill may be determined based on the posted speed limit on downhill and the increased posted speed limit. In a third example of HRO operation in FIG. 3C, a posted speed limit is not changed during pre-downhill, on downhill, and post-downhill and the PDSC increases vehicle speed from target downhill speed back to posted speed. In some operating scenarios, HRO operation may be disabled due to a low confidence prediction of resulting vehicle speed. In some operating scenarios if vehicle speed is higher than the target during HRO, HRO operation may be switched to engine brake operation with holding or downshifting transmission gear for some duration near the end of a downhill route segment.

For applications where there is more than one retarding device, the retarding power capability used by the PDSC may be the combined power capability of all retarding devices. This combined power capability is used to determine target speed and target gear as well as the moment to start ramping down/downshift pre-downhill. If a retarding device is powertrain retarder, its corresponding power curve takes into the impact of coolant and oil temperatures. These temperatures can also come from a predicted model based on look-ahead data. Retarding devices can include but not limited to any devices that provide retarding powers, compression release brake, wastegate, VGT, exhaust throttle, intake air throttle, all types of powertrain retarders (hydraulic, electromagnetic, etc.), engine/vehicle accessories (compressors, fans) or any parasitic loads, aerodynamic enhancers/reducers such as air shield and automatic chassis lowering system, multi-axle (to increase rolling friction and axle losses).

In such applications, the PDSC may perform reactive and proactive actions. In a reactive action, when coolant temperature of powertrain retarder is high, its braking capability is reduced. This derated performance of powertrain retarder is taken into account and can result in a reduction in calculated target speed and target gear. This control action continuously happens, including both pre-downhill and downhill. In a proactive action, if the controller predicts that powertrain retarder may result into a de-rated condition, its power curve used in the controller can be reduced further from the instantaneous its power capability to prevent powertrain retarder from getting into derate or to get to the right target gear and speed in a proactive way to account for an upcoming powertrain retarder derate.

If there are retarding devices with different braking torque/power delivery resolutions, the high-resolution retarding device is used to assist the low-resolution retarding device so that powertrain can deliver high resolution braking torque/power, thus achieving good vehicle speed control during downhill. For the retarding devices controlled by their own control modules, speed/torque/power requests such as J1939 TSC1 message can be used by an electronic control unit (ECU) operating the PDSC.

During torque-interrupt transmission shifting when engine braking power is lost. Any other retarding devices, such as powertrain retarder, or vehicle foundation brake can be utilized as a torque filling device to compensate for the lost engine retarding power during the transmission gear shift. Predictive information can be utilized so that powers of these retarding devices are reserved for using during the shifting.

In some operating scenarios the PDSC may be faced with a loss of losing look-ahead data. The loss of look-ahead data may be abrupt (for example, due to failure of a GPS or navigational system, or gradual due to vehicle movement (for example, the route between two points may not be mapped). In the event of an abrupt loss of look-ahead data, the PDSC may be configured to takes only predictive action based on the current look-ahead data. Past look-ahead data and decision (before data loss) may be excluded. This is a conservative approach an assumes that the past look-ahead data is insufficiently reliable to be relied upon. In some embodiment, the PDSC may utilize past look-ahead data (before data loss) to make control decisions. In event of a gradual loss of look-ahead data, the PDSC may utilize past look-ahead data (before data loss) to make control decisions.

In some operating scenarios the PDSC may be faced with a failure of a vehicle speed sensor (for example, a failure or loss of data from a transmission output shaft speed sensor). In such scenarios the PDSC may utilize engine speed and transmission gear number to determine corresponding vehicle speed for its usage. During shifting, this vehicle speed may be considered as a constant.

In some operating scenarios, if the PDSC is faced with a loss of look-ahead data, other sensors, such as camera, LIDAR, can be used to provide look-ahead grade and posted speed limit. In one embodiment, fusion of cloud-based look-ahead device e-Horizon, camera, LIDAR, road grade sensor can be utilized to improve accuracy of look-ahead data.

In another aspect, the PDSC may perform adaptation action to adjust its parameters, such as the margin factor for engine braking torque curve, based on actions that the PDSC performs in response to a feedback mechanism. The engine braking torque curve may consider the impact of altitude where engine braking capability is limited from nominal condition. A model of engine braking torque curve derate using ambient air pressure may be utilized by PDSC for its prediction algorithms.

In another aspect, the PDSC may utilize vehicle-to-X (V2X) communication to consider the impact of traffic, including surrounding vehicles, traffic light in additional to posted speed limit to determine an effective posted speed limit and use it as the input to the feature. In one embodiment, advisory speed can be considered as a part of effective posted speed limit determination. Other information such as weather (rain, snow, high wind) and road (e.g. road curvature) can be used to determine vehicle dynamics parameters as well as the effective posted speed limit, which considers the impact of these factors. In one embodiment, an icy or wet road condition can be used to optimize vehicle deceleration process to avoid events such as jack-knife, for example, if vehicle on the back losing look-ahead, a front vehicle can provide/supplement e-horizon information thanks to vehicle-to-vehicle (V2V) communication. While all the main computation of the feature can happen within ECU, some additional advanced heavy computation can be performed on the cloud and communicate the information to ECU.

In a further aspect, the PDSC determines its operating mode (for example, disabled, inactive, active, degraded, and fault modes) and PDSC communicates its mode, speed target, and transmission gear request to display on vehicle dash. An example of a degraded mode is when look-ahead data is not available and PDSC only uses its feedback mechanism to protect vehicle. In another example, the configuration matching between an ECU with PDSC and e-Horizon can be a digital affirmation process to ensure look-ahead parameter exists. If it does not exist, PDSC can set to fault or inactive mode to warn driver. In another aspect, the PDSC may automatically activate four-way flashers/hazard lights.

The Machine Mass Estimator (MME) and Vehicle Parameter Determination (VPD) features may be used for the prediction algorithm in PDSC. As used herein, VPD is the feature to determine all power losses of the vehicle, including rolling friction loss, aerodynamic loss, and powertrain loss. Different sensors can be used for improving these estimations, such as torque sensor, wind sensor, camera (for detecting road surface, thus rolling resistance modeling), pressure sensor in air bag estimate mass of vehicle sit on axle. Measurement from these sensors can be fused with current production sensors used for these features to improve the prediction algorithm in ECU.

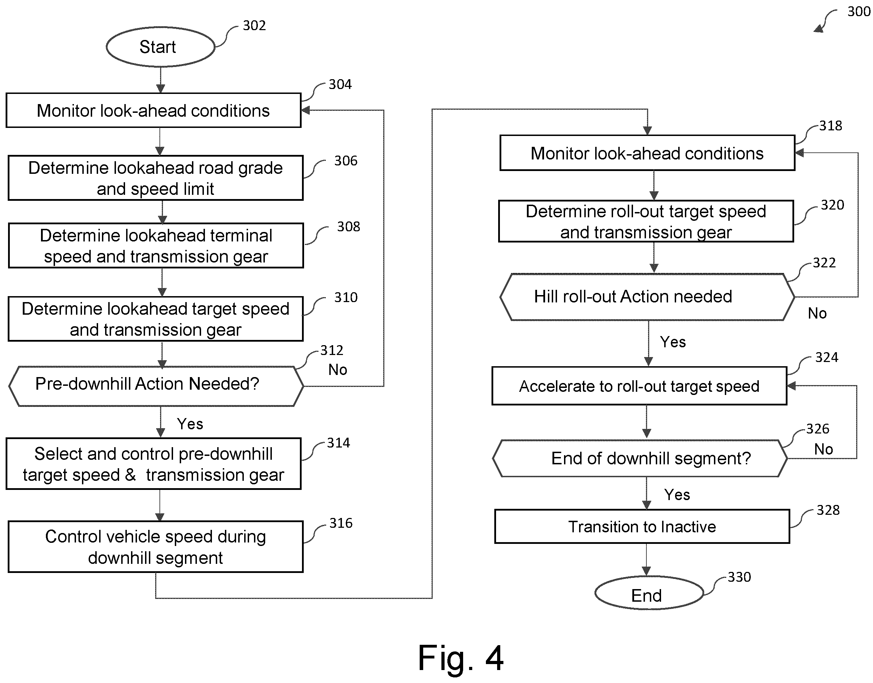

With reference to FIG. 4, there is illustrated a flow diagram of an example procedure 300 for dynamically adjusting a speed of vehicle 100 toward a target speed and shifting gear of transmission 106 prior to or upon reaching a downhill segment of a route such as downhill route segment 204 in addition to dynamically adjusting the vehicle speed and the transmission gear while the vehicle is traveling along downhill route segment 204.

Procedure 300 begins at operation 302, in which a control routine is started for controlling the vehicle speed and shifting transmission gear before the downhill route segment 204 in response to a target speed for vehicle 100 and target gear for transmission 106. The target speed may be determined based on lookahead road grade and speed limit along the downhill route segment 204, as discussed above.

Operation 302 may begin by interpreting a key-on event, completion of a cycle, a restarting procedure 300, by initiation of a vehicle operation such as a motoring condition, or by initiation by the vehicle operator or a technician. As used herein, a motoring condition is an operating condition in which the engine 104 is not demanding fuel to propel the vehicle 100, such as when the throttle is closed, the accelerator pedal 145 is lifted, the accelerator pedal 145 resides in a deadband region not demanding fuel, and/or when the accelerator pedal 145 is not depressed.

Procedure 300 continues from operation 302 at operation 304. Operation 304 includes monitoring look ahead conditions along the route 202, such as approaching route grade, road slope, grade length, and vehicle speed limits, to name a few. It is contemplated that in certain embodiments, the look ahead conditions may include the road grade and speed limit for the entire route 202. In other embodiments, the look ahead conditions are for a portion of the route prior to the downhill route segment 204, the downhill route segment, and forward of the downhill route segment, all for which the vehicle speed is to be controlled using procedure 300.

Procedure 300 continues from operation 304 to operation 306 to determine lookahead road grade and speed limit. Subsequently, operation 308 includes determining lookahead terminal speed and transmission gear. After that, operation 310 includes determining lookahead target speed and transmission gear. The terminal speed and transmission gear and the target speed and transmission gear may be determined in response to vehicle configuration, vehicle mass, road slope, and other conditions, as discussed above. The terminal speed and transmission gear and the target speed and transmission gear may be continually updated during operation of vehicle 100, or periodically updated in response to the input of operating parameters into the ECS along the route.

Procedure 300 continues to conditional 312 to determine if the any pre-downhill action is needed while vehicle is approaching a downhill segment of the route 202. If conditional 312 is NO, procedure 300 continues to operation 304 to continue monitoring look ahead conditions along the route 202. If conditional 312 is YES, indicating an action is needed, procedure 300 continues from conditional 312 to operation 314.

Procedure 300 performs operation 314 to select and then control to a pre-downhill target vehicle speed and pre-downhill target transmission gear. In an embodiment, the pre-downhill target vehicle speed and pre-downhill target transmission gear is selected prior to or upon the vehicle reaching the downhill segment. In an embodiment, the target transmission gear is selected to transition the vehicle to a desired pre-downhill speed and to provide a gearing configured to contribute to maintaining desired downhill vehicle speed.

From operation 314, procedure 300 continues to operation 316, where vehicle speed is controlled while vehicle 100 travels along downhill route segment 204. In an embodiment, one or more components of the vehicle's powertrain may be controlled during the during the downhill route segment to reduce or maintain vehicle speed to comply with the downhill vehicle speed limit. In another embodiment, operation of a powertrain retarder during the downhill route segment to reduce or maintain vehicle/engine speed without applying the foundation brakes may be controlled to comply with the downhill vehicle speed limit. In another embodiment, the transmission may be downshifted to a lower gear during the downhill route segment to reduce or maintain vehicle/engine speed to comply with the downhill speed limit. In yet another embodiment, the foundation brakes may be operated during the downhill route segment to reduce or maintain vehicle/engine speed to comply with the downhill speed limit.

From operation 316, procedure 300 continues to operation 318 to continue monitoring look ahead conditions along the route 202. From operation 318, procedure 300 continues to operation 320 to determine roll-out target speed and transmission gear. In an embodiment, the roll-out target speed may be determined in response to a first posted speed limit of the portion of the downhill route segment and a second posted speed limit along a route segment that is forward or ahead of the portion of the downhill route segment. From operation 320, procedure 300 continues to conditional 322 to determine if the vehicle is approaching the end of the downhill segment of the route 202 and a Hill roll-out Action is needed. If conditional 322 is NO, procedure 300 continues to operation 318 to continue monitoring look ahead conditions along the route 202. If conditional 322 is YES, indicating the end of downhill segment of the route 202 is approaching and Hill roll-out Action can be performed, procedure 300 continues to operation 324.

Procedure 300 performs operation 324, where the vehicle is controlled to accelerate toward the roll-out target speed when the vehicle reaches the portion of the downhill segment of the route 202. From operation 324, procedure 300 continues to conditional 326 to determine if end of downhill achieved. If conditional 326 is NO, procedure 300 continues to operation 324 to continue accelerating to roll-out target speed along the route 202. If conditional 326 is YES, indicating the end of downhill segment of the route 202 is achieved, procedure 300 continues to operation 328. Procedure performs operation 328 to transition to the PDSC to inactive. Procedure 300 is then complete and ends at operation 330, where procedure 300 may be restarted as discussed above with respect to operation 302.

The present disclosure provides an advanced look ahead control feature that electronically controls the vehicle as the vehicle traverses steep grades through selection of optimal powertrain decisions, specifically for engine, transmission, foundation brakes, and other retarders, thereby ensuring safe and controlled grade descents.

Various aspects of the present disclosure are contemplated. According to one aspect, a vehicle system is provided that includes a powertrain including a prime mover and a transmission coupled to the prime mover, one or more powertrain retarders, one or more ground engaging wheels coupled to the transmission that are capable of being driven by the prime mover through the transmission, foundation brakes that are actuatable to slow the one or more ground engaging wheels, and an electronic control system in operative communication with the prime mover, the transmission, and the foundation brakes.

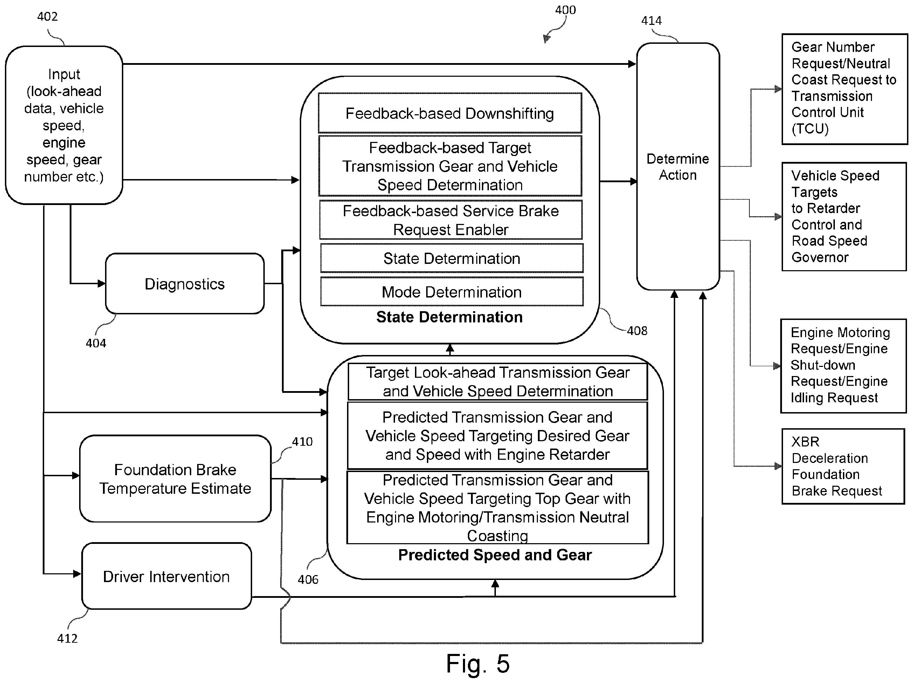

With reference to FIG. 5, there is illustrated a diagram depicting certain aspects of a software architecture 400 in VSM control unit 150 configured to control various operational aspects of vehicle 100. For example, software architecture 400 may be configured to receive input 402 comprising look ahead data including road slope or grade and posted speed limit, and other vehicle operating parameters. Software architecture 400 may also include a processor for performing diagnostics 404 based on the look ahead data and vehicle operating parameters to predict a vehicle speed prior to reaching a downhill route segment. In some aspects, a predicted speed and gear module 406 may be configured to determine a number of operational aspects of vehicle 100 including target look-ahead gear and vehicle speed, predicted gear and vehicle speed targeting the target gear and speed with engine retarder, and predicted gear and vehicle speed targeting top gear with engine motoring. Additionally, performing diagnostics 404 based on look ahead data and vehicle operating parameters may be utilized to determine the state of the vehicle 100 prior to, just before reaching, or on a downhill route segment. In some aspects, a state determination module 408 may be configured to contemplate vehicle and/or engine speed feedback-based downshifting, determine feedback-based target transmission gear and vehicle speed, vehicle and/or engine speed feedback-based foundation brakes request enabler, state determination, and mode determination. In some aspects, predicted speed and gear module 406 may use the foundation brakes temperature estimated in foundation brake temperature module 410 to determine target look-ahead gear and vehicle speed. In some aspects, software architecture 400 may contemplate driver intervention 412, for example, when a driver of the vehicle desires to manually reduce vehicle speed or manually downshift the transmission gear. Software architecture 400 may be configured to determine one or more actions in response to calculations from state determination module 408, driver intervention 412, or other user input. Determine action module 414 may be configured to perform actions including gear number request/neutral coast request to TCU 140, vehicle speed target to retarder control and road speed governor, engine motoring request, and XBR deceleration request to foundation brake controller. In some aspects, determine action module 414 may use the foundation brakes temperature estimated in foundation brake temperature module 410.

In accordance with the above-described implementations, the present disclosure provides a dynamic speed control feature for a vehicle traveling along a flat or hilled route. In some implementations, the feature automatically determines target transmission gear and target vehicle speed for a look-ahead horizon based on look-ahead grade and speed limit data. The calculation is applicable for both downhill and normal flat road to account for speed limit change, for both accelerator-based driving and cruise control modes.

In an implementation, the dynamic speed control feature determines when to start taking action to ramp down vehicle speed and/or downshift transmission to achieve target transmission gear and target vehicle speed with calibratable margins in distance to downhill or a new speed limit. During this staging process, the feature performs corrective action, either slowing down the process or applying the vehicle's foundation brakes to ramp down faster, if needed, based on the updated prediction. During the staging while still on a flat road and the vehicle already reaching a target gear and target speed, the feature may perform a pseudo cruise control mode to automatically fuel the vehicle to maintain the target speed on the rest of the road segment pre-downhill.

In an implementation, the dynamic speed control feature automatically controls foundation brakes with brake snubbing if a determination is made that the current transmission gear and vehicle or engine speeds are not safe due to downhill grade or vehicle or engine speed being higher than posted speed limit or max acceptable engine speed. Subsequently, after foundation brakes action is taken resulting in lower engine speed to allow downshifting, the feature automatically performs downshifting action. Foundation brakes temperature may be used to optimize the usage of foundation brakes. Foundation brakes may be used as a torque filling device during transmission shifting to maintain vehicle speed on downhill.

In an implementation, the dynamic speed control feature automatically controls engine brake, transmission, other retarders, and foundation brakes even when fully losing look-ahead data to make sure vehicle is traveling downhill safely.

In an implementation, the feature allows a driver to reduce vehicle speed further from the safe speed if the driver desires via foundation brakes pedal or manual downshift. In this aspect, the feature prevents an inexperienced driver from increasing vehicle speed further than the safe descent speed.

In another implementation, the feature performs a hill roll-out action by utilizing grade at the end of the downhill section to perform either motoring or neutral coast to meet a posted speed limit requirement, increase fuel economy, and improve driveability.

In an implementation, the feature coordinates with a powertrain retarder and/or other retarding devices of the engine, powertrain, and vehicle to optimize the integrated powertrain performance for the applications where other retarding devices are still needed.

In yet another implementation, the feature provides a warning to the driver via the vehicle's dash when a degraded mode or a failure mode happens besides maximizing the protection capability of the feature during these modes.

According to another aspect of the present disclosure a controller is provided that is configured to execute any of the control techniques and methods described herein.

As illustrated by this detailed description, the present disclosure contemplates multiple embodiments including the following example embodiments.

Example embodiment number 1 is a vehicle system, comprising: a powertrain including a prime mover and a transmission coupled to the prime mover; one or more ground engaging wheels coupled to the transmission and capable of being driven by the prime mover through the transmission; foundation brakes actuatable to slow the one or more ground engaging wheels; and an electronic control system in operative communication with the prime mover, the transmission, and the foundation brakes, the electronic control system being configured to: determine, prior to reaching a downhill route segment, a pre-downhill target vehicle speed, a pre-downhill target transmission gear for the vehicle, and a downhill vehicle speed limit, control the vehicle to achieve the pre-downhill target vehicle speed and the pre-downhill target transmission gear for the vehicle prior to or upon reaching the downhill route segment, and control the vehicle during the downhill route segment not to exceed the downhill vehicle speed limit.

Example embodiment number 2 includes the features of example embodiment number 1, wherein the electronic control system is configured to: prior to the downhill route segment, first control one or more components of the powertrain to provide at least one of controlling speed of the vehicle and maintaining speed of the vehicle to without applying the foundation brakes.

Example embodiment number 3 includes the features of example embodiment number 2, wherein the powertrain includes an engine and the maintaining speed of the vehicle comprises fueling the engine to maintain speed of the vehicle.

Example embodiment number 4 includes the features of example embodiment number 2, wherein the electronic control system is configured to, prior to the downhill route segment, in response to a determination that the first control is not effective to achieve the pre-downhill target vehicle speed, operate the foundation brakes to one of control speed of the vehicle and maintain speed of the vehicle.

Example embodiment number 5 includes the features of example embodiment number 2, wherein the electronic control system is configured to: prior to the downhill route segment, at least one of operate a powertrain retarder and downshift the transmission to a lower gear to contribute to at least one of the controlling speed of the vehicle and the maintaining speed of the vehicle.

Example embodiment number 6 includes the features of example embodiment number 2, wherein the electronic control system is configured to one of: during the downhill route segment and during downshifting of the transmission, operate the foundation brakes to contribute to at least one of the controlling speed of the vehicle and the maintaining speed of the vehicle, and prior to the downhill route segment and during downshifting of the transmission, operate the foundation brakes to contribute to at least one of the controlling speed of the vehicle and the maintaining speed of the vehicle.

Example embodiment number 7 includes the features of example embodiment number 1, wherein the electronic control system is configured to: determine a roll-out target speed for the vehicle over a portion of the downhill route segment, and control the vehicle to accelerate toward the roll-out target speed when the vehicle reaches the portion of the downhill route segment.

Example embodiment number 8 includes the features of example embodiment number 7, wherein the roll-out target speed is determined in response to one of a first speed limit of the portion of the downhill route segment and a second speed limit of a forward segment forward of the portion of the downhill route segment.

Example embodiment number 9 includes the features of example embodiment number 7, wherein the electronic control system is configured to control the vehicle to accelerate toward the roll-out target speed when the vehicle reaches the portion of the downhill route segment by one of: engine-off coasting, neutral coasting, and motoring in combination with transmission gear up shifting to optimize engine motoring friction.

Example embodiment number 10 includes the features of example embodiment number 1, wherein the electronic control system is configured to, in response to driver operation of the foundation brakes, at least one of: operate a powertrain retarder to supplement the driver operation, decrease the downhill vehicle speed limit, and decrease the pre-downhill target vehicle speed.

Example embodiment number 11 includes the features of example embodiment number 1, wherein the electronic control system is configured to one of: first attempt to control vehicle speed to the pre-downhill target vehicle speed by operating the foundation brakes in combination with a powertrain retarder, and second, if the first attempt is not successful, operate the foundation brakes in combination with a transmission gear shift to control vehicle speed to the pre-downhill target vehicle speed; first attempt to control or maintain vehicle speed below the downhill vehicle speed limit by operating the foundation brakes in combination with the powertrain retarder, and second, if the first attempt is not successful, operate the foundation brakes in combination with a transmission gear shift to control or maintain vehicle speed below the downhill vehicle speed limit; and supplement a powertrain retarder with foundation brakes to achieve a downhill vehicle speed limit.

Example embodiment number 12 is a method, comprising: operating a vehicle including a prime mover in a motoring condition, the vehicle including a transmission coupled to the prime mover, one or more ground engaging wheels coupled to the transmission and capable of being driven by the prime mover through the transmission, and foundation brakes actuatable to slow the one or more ground engaging wheels; determining, prior to reaching a downhill route segment, a pre-downhill target vehicle speed, a pre-downhill target transmission gear for the vehicle, and a downhill vehicle speed limit; controlling the vehicle to achieve the pre-downhill target vehicle speed and the pre-downhill target transmission gear for the vehicle prior to or upon reaching the downhill route segment; and controlling the vehicle during the downhill route segment not to exceed the downhill vehicle speed limit.

Example embodiment number 13 includes the features of example embodiment number 12, comprising: prior to the downhill route segment, first controlling one or more components of the powertrain to provide at least one of controlling speed of the vehicle and maintaining speed of the vehicle to without applying the foundation brakes.

Example embodiment number 14 includes the features of example embodiment number 13, wherein the powertrain includes an engine and the maintaining speed of the vehicle comprises fueling the engine to maintain speed of the vehicle.

Example embodiment number 15 includes the features of example embodiment number 13, comprising, prior to the downhill route segment, in response to a determination that the first controlling is not effective to achieve the pre-downhill target vehicle speed, operating the foundation brakes to one of control speed of the vehicle and maintain speed of the vehicle.

Example embodiment number 16 includes the features of example embodiment number 13, comprising: prior to the downhill route segment, at least one of operating a powertrain retarder and downshifting the transmission to a lower gear to contribute to at least one of the controlling speed of the vehicle and the maintaining speed of the vehicle.

Example embodiment number 17 includes the features of example embodiment number 13 comprising one of: during the downhill route segment and during downshifting of the transmission, operating the foundation brakes to contribute to at least one of the controlling speed of the vehicle and the maintaining speed of the vehicle, and prior to the downhill route segment and during downshifting of the transmission, operating the foundation brakes to contribute to at least one of the controlling speed of the vehicle and the maintaining speed of the vehicle.

Example embodiment number 18 includes the features of example embodiment number 12, comprising: determining a roll-out target speed for the vehicle over a portion of the downhill route segment, and controlling the vehicle to accelerate toward the roll-out target speed when the vehicle reaches the portion of the downhill route segment.

Example embodiment number 19 includes the features of example embodiment number 18, wherein the roll-out target speed is determined in response to one of a first speed limit of the portion of the downhill route segment and a second speed limit of a forward segment forward of the portion of the downhill route segment.

Example embodiment number 20 includes the features of example embodiment number 18, comprising controlling the vehicle to accelerate toward the roll-out target speed when the vehicle reaches the portion of the downhill route segment by one of: engine-off coasting, neutral coasting, and motoring in combination with transmission gear up shifting to optimize engine motoring friction.

Example embodiment number 21 includes the features of example embodiment number 12, comprising, in response to driver operation of the foundation brakes, at least one of: operating a powertrain retarder to supplement the driver operation, decreasing the downhill vehicle speed limit, and decreasing the pre-downhill target vehicle speed.

Example embodiment number 22 includes the features of example embodiment number 12, comprising one of: first attempting to control vehicle speed to the pre-downhill target vehicle speed by operating the foundation brakes in combination with a powertrain retarder, and second, if the first attempting is not successful, operating the foundation brakes in combination with a transmission gear shift to control vehicle speed to the pre-downhill target vehicle speed; first attempting to control or maintain vehicle speed below the downhill vehicle speed limit by operating the foundation brakes in combination with the powertrain retarder, and second, if the first attempt is not successful, operate the foundation brakes in combination with a transmission gear shift to control or maintain vehicle speed below the downhill vehicle speed limit; and supplementing a powertrain retarder with foundation brakes to achieve a downhill vehicle speed limit.

Example embodiment number 23 is a controller apparatus configured to perform the method of any of example embodiments 12 through 22.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A vehicle system, comprising:
a powertrain including a prime mover and a transmission coupled to the prime mover;
one or more ground engaging wheels coupled to the transmission and capable of being driven by the prime mover through the transmission;
foundation brakes actuatable to slow the one or more ground engaging wheels; and
an electronic control system in operative communication with the prime mover, the transmission, and the foundation brakes, the electronic control system being configured to:
determine, prior to reaching a downhill route segment, a pre-downhill target vehicle speed, a pre-downhill target transmission gear for the vehicle, and a downhill vehicle speed limit,
control the vehicle to achieve the pre-downhill target vehicle speed and the pre-downhill target transmission gear for the vehicle prior to or upon reaching the downhill
route segment, and
control the vehicle during the downhill route segment not to exceed the downhill vehicle speed limit.

2. The vehicle system of claim 1, wherein the electronic control system is configured to, in response to driver operation of the foundation brakes, at least one of:
operate a powertrain retarder to supplement the driver operation,
decrease the downhill vehicle speed limit, and
decrease the pre-downhill target vehicle speed.

3. The vehicle system of claim 1, wherein the electronic control system is configured to one of:
first attempt to control vehicle speed to the pre-downhill target vehicle speed by operating the foundation brakes in combination with a powertrain retarder, and second, if the first attempt is not successful, operate the foundation brakes in combination with a transmission gear shift to control vehicle speed to the pre-downhill target vehicle speed;
first attempt to control or maintain vehicle speed below the downhill vehicle speed limit by operating the foundation brakes in combination with the powertrain retarder, and second, if the first attempt is not successful, operate the foundation brakes in combination with a transmission gear shift to control or maintain vehicle speed below the downhill vehicle speed limit; and
supplement a powertrain retarder with foundation brakes to achieve a downhill vehicle speed limit.

4. A method, comprising:
operating a vehicle including a prime mover in a motoring condition, the vehicle including a transmission coupled to the prime mover, one or more ground engaging wheels coupled to the transmission and capable of being driven by the prime mover through the transmission, and foundation brakes actuatable to slow the one or more ground engaging wheels;
determining, prior to reaching a downhill route segment, a pre-downhill target vehicle speed, a pre-downhill target transmission gear for the vehicle, and a downhill vehicle speed limit;
controlling the vehicle to achieve the pre-downhill target vehicle speed and the pre-downhill target transmission gear for the vehicle prior to or upon reaching the downhill route segment; and
controlling the vehicle during the downhill route segment not to exceed the downhill vehicle speed limit.

5. The vehicle system of claim 1 or the method of claim 4, comprising:
prior to the downhill route segment, first controlling one or more components of the powertrain to provide at least one of controlling speed of the vehicle and maintaining speed of the vehicle to without applying the foundation brakes.

6. The vehicle system or the method of claim 5, wherein the powertrain includes an engine and the maintaining speed of the vehicle comprises fueling the engine to maintain speed of the vehicle.

7. The vehicle system of claim 5 wherein the electronic control system is configured to, or the method of claim 5, comprising:
prior to the downhill route segment, in response to a determination that the first controlling is not effective to achieve the pre-downhill target vehicle speed, operating the foundation brakes to one of control speed of the vehicle and maintain speed of the vehicle.

8. The vehicle system of claim 5 wherein the electronic control system is configured to, or the method of claim 5, comprising:
prior to the downhill route segment, at least one of operating a powertrain retarder and downshifting the transmission to a lower gear to contribute to at least one of the controlling speed of the vehicle and the maintaining speed of the vehicle.

9. The vehicle system of claim 5 wherein the electronic control system is configured to one of, or the method of claim 5, comprising one of:
during the downhill route segment and during downshifting of the transmission, operating the foundation brakes to contribute to at least one of the controlling speed of the vehicle and the maintaining speed of the vehicle, and
prior to the downhill route segment and during downshifting of the transmission, operating the foundation brakes to contribute to at least one of the controlling speed of the vehicle and the maintaining speed of the vehicle.

10. The vehicle system of claim 4 wherein the electronic control system is configured to, or the method of claim 4, comprising:
determining a roll-out target speed for the vehicle over a portion of the downhill route segment, and
controlling the vehicle to accelerate toward the roll-out target speed when the vehicle reaches the portion of the downhill route segment.

11. The vehicle system of claim 10 or the method of claim 10, wherein the roll-out target speed is determined in response to one of a first speed limit of the portion of the downhill route segment and a second speed limit of a forward segment forward of the portion of the downhill route segment.

12. The vehicle system of claim 10 wherein the electronic control system is configured to, or the method of claim 10, comprising:
controlling the vehicle to accelerate toward the roll-out target speed when the vehicle reaches the portion of the downhill route segment by one of: engine-off coasting, neutral coasting, and motoring in combination with transmission gear up shifting to optimize engine motoring friction.

13. The method of claim 4, comprising, in response to driver operation of the foundation brakes, at least one of:
operating a powertrain retarder to supplement the driver operation,
decreasing the downhill vehicle speed limit, and
decreasing the pre-downhill target vehicle speed.

14. The method of claim 4, comprising one of:
first attempting to control vehicle speed to the pre-downhill target vehicle speed by operating the foundation brakes in combination with a powertrain retarder, and second, if the first attempting is not successful, operating the foundation brakes in combination with a transmission gear shift to control vehicle speed to the pre-downhill target vehicle speed; and
first attempting to control or maintain vehicle speed below the downhill vehicle speed limit by operating the foundation brakes in combination with the powertrain retarder, and second, if the first attempt is not successful, operate the foundation brakes in combination with a transmission gear shift to control or maintain vehicle speed below the downhill vehicle speed limit; and
supplementing a powertrain retarder with foundation brakes to achieve a downhill vehicle speed limit.
